# EUROPÄISCHE PATENTANMELDUNG

(11) **EP 1 747 933 A1**
(43) Veröffentlichungstag der Anmeldung: **31.01.2007**
(21) Anmeldenummer: 05106608.2
(22) Anmeldetag: 19.07.2005
(51) Int. Cl.: B60K 31/04

(54) **Geschwindigkeitsregelungsvorrichtung für Kraftfahrzeuge**

(71) Anmelder: Fz. Tech Bruno Meier, 8224 Löhningen (CH)
(72) Erfinder: Meier, Bruno, 8224, Löhningen (CH)
(74) Vertreter: Dr. Graf & Partner

(57) **Zusammenfassung**

Die Geschwindigkeitsregelungsvorrichtung (1) für Kraftfahrzeuge (6), umfasst ein bewegliches Betätigungselement (2), insbesondere das Gaspedal, zum Beschleunigen des Kraftfahrzeuges (6), einen Sensor (3) zum Erfassen der Stellung des Betätigungselementes (2), sowie eine Geschwindigkeitsvorgabevorrichtung (4), welche abhängig vom Wert des Sensors (3) zumindest zwei unterschiedliche Betriebszustände (B) erkennt, einen zweiten Betriebszustand (B2) zum Halten der Geschwindigkeit V auf einer konstanten Sollgeschwindigkeit Vsoll, und einen dritten Betriebszustand (B3) zum Verändern der aktuellen Istgeschwindigkeit Vist, sowie umfassend eine Regelungsvorrichtung (5), welche im zweiten Betriebszustand (B2) die Istgeschwindigkeit Vist des Kraftfahrzeuges mit der Sollgeschwindigkeit Vsoll vergleicht, und den Motor und/oder die Bremse des Kraftfahrzeuges (6) derart ansteuert, dass sich das Kraftfahrzeug (6) mit der Sollgeschwindigkeit Vsoll bewegt. Wird das Gaspedal über einen bestimmten Zeitraum nicht oder nur wenig bewegt, wird die aktuelle Geschwindigkeit des Sollgeschwindigkeit Vsoll vorgegeben.

## Beschreibung

Die Erfindung betrifft eine Geschwindigkeitsregelungsvorrichtung für Kraftfahrzeuge gemäss dem Oberbegriff von Anspruch 1. Die Erfindung betrifft weiter ein Verfahren zur Geschwindigkeitsregelung eines Kraftfahrzeuges gemäss dem Oberbegriff von Anspruch 12.

### Stand der Technik

Während dem Fahren mit einem Kraftfahrzeug, beispielsweise einem Auto, wird die Geschwindigkeit üblicherweise direkt geregelt, indem der Fahrer mit Hilfe eines Gaspedals eine Drosselklappe, eine Einspritzpumpe, oder bei neueren Motoren die Nockenwelle und die Einspritzmenge beeinflusst, um dadurch die Motorenleistung zu beeinflussen. Die Geschwindigkeit kann zudem über ein Bremspedal beeinflusst werden, indem die auf die Räder ausgeübte Bremskraft variiert wird. Diese Anordnung weist den Nachteil auf, dass die Stellung des Gaspedals öfters verändert werden muss, und dass teilweise zudem zwischen dem Gaspedal und dem Bremspedal gewechselt werden muss, um das Kraftfahrzeug mit einer bestimmten, insbesondere konstanten Geschwindigkeit zu fahren. Besonders anstrengend ist das Fahren mit konstanter Geschwindigkeit, weil bereits eine geringfügige Steigung, ein Gefälle, oder ein veränderter Fahrwiderstand die Geschwindigkeit des Kraftfahrzeuges verändert. Um die Geschwindigkeit konstant zu halten muss der Fahrer die Geschwindigkeit ständig visuell überwachen und durch eine Änderung der Gaspedalstellung korrigieren. Trotz einem derart aufmerksamen Fahrstil kann es vorkommen, dass sich die Geschwindigkeit des Kraftfahrzeuges auf Grund einer geringfügigen Unachtsamkeit erhöht, was beim Überschreiten einer gesetzlichen Höchstgeschwindigkeit eine Busse zur Folge haben kann.

Es sind sogenannte Tempomaten bekannt, welche bei Fahrzeugen mit Automatikgetriebe verwendet werden. Ein derartiger Tempomat weist die Nachteile auf, dass sich die Geschwindigkeit des Fahrzeuges bei Gefälle beschleunigen kann, dass dieser kompliziert zu bedienen ist, und dass dieser beim Bremsen ausgeschaltet wird, und danach wieder neu aktiviert und teilweise wieder eingestellt werden muss. Zudem ist ein zusätzlicher
Bedienungsschalter zum Bedienen des Tempomaten erforderlich. Der Tempomat ist zudem für Fahrzeuge mit handgeschaltetem Getriebe gänzlich ungeeignet, da dieser bei jedem Gangwechsel neu eingestellt werden muss. Zudem ist der Tempomat für Fahrten in dichtem Verkehr ungeeignet.

Es ist somit Aufgabe der vorliegenden Erfindung eine verbesserte Vorrichtung zur Geschwindigkeitsregelung von Kraftfahrzeugen bereitzustellen.

Diese Aufgabe wird gelöst mit einer Geschwindigkeitsregelungsvorrichtung aufweisend die Merkmale von Anspruch 1. Die Unteransprüche 2 bis 11 betreffen weitere, vorteilhafte Ausgestaltungen. Die Aufgabe wird weiter gelöst mit einem Verfahren zur Geschwindigkeitsregelung aufweisend die Merkmale von Anspruch 12.

Die Aufgabe wird insbesondere gelöst mit einer Geschwindigkeitsregelungsvorrichtung für Kraftfahrzeuge, umfassend ein bewegliches Betätigungselement zum Beschleunigen des Kraftfahrzeuges, einen Sensor zum Erfassen der Stellung des Betätigungselementes, sowie eine Geschwindigkeitsvorgabevorrichtung, welche abhängig vom Wert des Sensors zumindest zwei unterschiedliche Betriebszustände erkennt, einen zweiten Betriebszustand zum Halten der Geschwindigkeit V auf einer konstanten Sollgeschwindigkeit Vsoll, und einen dritten Betriebszustand zum Verändern der aktuellen Istgeschwindigkeit Vist, sowie umfassend eine Regelungsvorrichtung, welche im zweiten Betriebszustand die Istgeschwindigkeit Vist des Kraftfahrzeuges mit der Sollgeschwindigkeit Vsoll vergleicht, und den Motor und/oder das Automatikgetriebe, sowie die Bremse des Kraftfahrzeuges derart ansteuert, dass sich das Kraftfahrzeug mit der Sollgeschwindigkeit Vsoll bewegt.

Mit der Erfindung wird vom Fahrer hauptsächlich die Geschwindigkeit anstelle der Motorenleistung reguliert. Mit dieser Erfindung wird die bis jetzt verwendete Regelung der Motorenleistung und dadurch resultierender, variabler Geschwindigkeit neu durch eine Regulierung der Geschwindigkeit und dadurch resultierender, variabler Motorenleistung abgelöst.

Die erfindungsgemässe Geschwindigkeitsregelungsvorrichtung weist insbesondere den Vorteil auf, dass diese eine Geschwindigkeitsvorgabevorrichtung umfasst, welche über die Stellung des beweglichen Betätigungselementes, beim Automobil üblicherweise das Gaspedal, beim Motorrad beispielsweise das Handgas, sowohl den zweiten Betriebszustand zum Halten der Geschwindigkeit als auch den dritten Betriebszustand zum verändern der Geschwindigkeit erkennt. Mit Hilfe einer nachgeordneten Regelvorrichtung wird die Istgeschwindigkeit des Fahrzeuges gemessen, beispielsweise mit einem ABS Sensor oder über das Tachosignal, und die Stellglieder des Motors derart verändert und/oder das Automatikgetriebe, und die Bremse derart aktiviert, dass die Istgeschwindigkeit der vorgegebenen Sollgeschwindigkeit entspricht. In einer ersten Ausführungsform der Geschwindigkeitsregelungsvorrichtung steuert die Geschwindigkeitsvorgabevorrichtung nur den Motor an, sodass insbesondere bei ansteigender oder ebener Fahrbahn die Fahrgeschwindigkeit konstant gehalten wird. In einer zweiten Ausführungsform steuert die Geschwindigkeitsvorgabevorrichtung zudem das Automatikgetriebe zum Gangwechsel, in einer dritten Ausführungsform die Bremse an, um insbesondere bei abfallender Fahrbahn die Fahrgeschwindigkeit ebenfalls konstant zu halten.

In einer bevorzugten Ausführungsform befindet sich befindet sich die Geschwindigkeitsvorgabevorrichtung während dem Beschleunigen und Abbremsen des Fahrzeuges im dritten Betriebszustand, in welchem sich das Fahrverhalten nicht von konventionellen, bekannten Fahrzeugen unterscheidet, indem nämlich das Betätigen des Gaspedals und/oder des Bremspedals das Fahren und somit die Geschwindigkeit bestimmt. Der Übergang der Geschwindigkeitsvorgabevorrichtung zwischen dem dritten und dem zweiten Betriebszustand erfolgt vorzugsweise dadurch, dass das bewegliche Betätigungselement, das Gaspedal, in konstanter oder beinahe konstanter Lage gehalten wird, und dadurch die Geschwindigkeitsvorgabevorrichtung, vorzugsweise nach einer gewissen Zeit von ein paar Sekunden, in den zweiten Betriebsmodus übergeht.

Eine zweite Möglichkeit wäre, dass der Übergang zum zweiten Betriebszustand durch eine leichte Rücknahme des Gaspedals und anschließendem Konstanthalten des Pedals, wiederum von einigen Sekunden, erfolgt.

Die dabei aktuelle Fahrgeschwindigkeit wird als Sollgeschwindigkeit Vsoll gespeichert, und der Motor und/oder die Bremse derart angesteuert, dass sich das Fahrzeug im zweiten Betriebszustand mit dieser Sollgeschwindigkeit Vsoll bewegt. Sobald das Gaspedal stärker bewegt wird, oder das Bremspedal betätigt wird, schaltet die Geschwindigkeitsvorgabevorrichtung in den dritten Betriebszustand um, und die Geschwindigkeit des Fahrzeuges kann wieder wie üblich durch Betätigen von Gas oder Bremse bestimmt werden. Die Erfindung weist somit den Vorteil auf, dass das Fahrzeug bei konstant gehaltenem Gaspedal mit konstanter Geschwindigkeit fährt. Die Erfindung weist den weiteren Vorteil auf, dass der Übergang zwischen den zwei Betriebszuständen automatisch und einzig über die Auslenkung des Gaspedals erfolgt. Dies bewirkt ein sehr angenehmes, entspanntes Fahrgefühl.

In einer weiteren vorteilhaften Ausgestaltung besteht der zweite Betriebszustand zum Halten der Geschwindigkeit nur innerhalb eines definierten Auslenkungsbereichs des Betätigungselementes von beispielsweise 5° bis 25° Auslenkung, was beispielsweise einem Geschwindigkeitsbereich zwischen 10 Km/h und 160Km/h entsprechen könnte. Im Auslenkungsbereich zwischen 0 und 5° sowie von über 25° befindet sich die Geschwindigkeitsvorgabevorrichtung im dritten Betriebszustand, selbst wenn das Gaspedal nicht bewegt wird. Dadurch erfährt das Fahrverhalten des Kraftfahrzeuges beim langsamen Fahren und beim starken Beschleunigen keine Veränderung, wogegen im Bereich zwischen 5° und 25° die erfindungsgemässe Geschwindigkeitsregelung wirkt. Dieser Wirkbereich der Geschwindigkeitsregelung kann je nach Erfordernis beliebig, in einem geeigneten Winkelbereich gewählt werden.

In einer weiteren vorteilhaften Ausgestaltung wird die Dynamik der Betätigung des Gaspedals, das heisst die Winkeländerung in Funktion der Zeit, verwendet, um zwischen unterschiedlichen Betriebszuständen zu wechseln.

Die erfindungsgemässe Geschwindigkeitsregelungsvorrichtung weist die Vorteile auf, dass die Fahrgeschwindigkeit sehr einfach konstant gehalten werden kann, dass die Pedalstellung unabhängig von Steigungen oder Gefälle beibehalten werden kann, und dass ein Tempomat überflüssig ist. Da das Pedal im Kraftfahrzeug bereits vorhanden ist, sind keine zusätzlichen Bedienungsmittel erforderlich, sodass man sich rasch an das Fahren des mit der
erfindungsgemässen Geschwindigkeitsregelungsvorrichtung ausgestatteten Kraftfahrzeuges gewöhnt. Die erfindungsgemässe Vorrichtung ist sowohl für Kraftfahrzeuge mit Schaltgetriebe als auch mit Automatikgetriebe geeignet. Besonders wichtig ist, dass gesetzliche Höchstgeschwindigkeiten problemlos eingehalten werden können, ohne ein dauerndes Korrigieren der Motorenleistung durch entsprechendes Verändern der Gaspedalstellung. Dies macht das Fahren entspannter, und hilft zudem Bussen wegen übersetzter Geschwindigkeit zu vermeiden. Zudem wird durch die konstante Fahrweise der Benzinverbrauch reduziert.

In einer weiteren vorteilhaften Ausgestaltung kann die Geschwindigkeitsregelungsvorrichtung zudem einen Geschwindigkeitshalteschalter umfassen, nach dessen Betätigen das Gaspedal vollständig losgelassen werden kann.
In einem weiteren Ausbauschritt könnten der zweite und dritte Betriebszustand über eine Kennfeldvorgabe geregelt werden, das heisst z.B., dass die Beschleunigung durch die Gaspedalstellung/Gaspedalbeschleunigung unter Berücksichtigung der aktuellen Geschwindigkeit und unter Verwendung des Kennfeldes geregelt wird.

### Kurze Beschreibung der Zeichnungen

Die vorliegende Erfindung wird unter Bezugnahme auf die nachfolgenden Figuren näher erläutert. Es zeigen:
Fig. 1 ein Blockdiagramm einer
   Geschwindigkeitsregelungsvorrichtung;
Fig. 2 ein Blockdiagramm einer weiteren Ausführungsform einer
   Geschwindigkeitsregelungsvorrichtung;
Fig. 3 eine Zuordnung der Betriebszustände in Funktion der
   Pedalstellung;
Fig. 4 ein weiteres Ausführungsbeispiel der Zuordnung von Betriebszuständen in Funktion der Pedalstellung bei einer Ausführungsform mit Geschwindigkeitshalteschalter;
Fig. 5 eine weitere Zuordnung der Betriebszustände in Funktion der Pedalstellung;
Fig. 6 eine weitere Zuordnung der Betriebszustände in Funktion der Pedaldynamik.

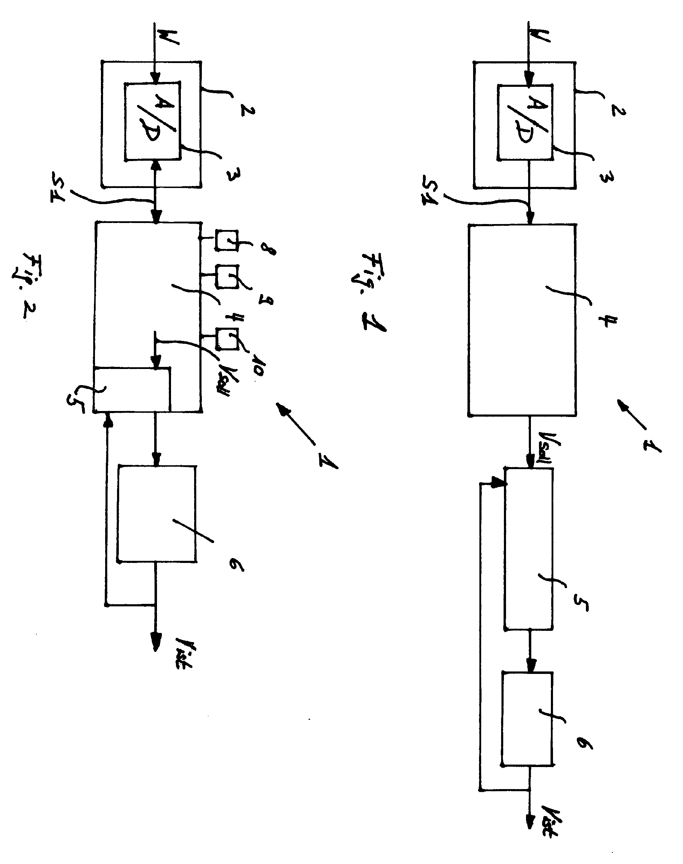

Die in Figur 1 dargestellte Geschwindigkeitsregelungsvorrichtung 1 umfasst ein als Pedal ausgestaltetes Betätigungselement 2, dessen Stellung von einem Sensor 3 erfasst wird. Als Pedal wird vorzugsweise das im Kraftfahrzeug wie einem Auto bereits vorhandene Gaspedal verwendet, weshalb im nachfolgenden Ausführungsbeispiel das Betätigungselement 2 als Gaspedal bezeichnet wird. Der Sensor 3 ist vorzugsweise als ein Analog-DigitalWandler ausgestaltet, sodass ein digitales Signal S 1 der Geschwindigkeitsvorgabevorrichtung 4 zugeleitet wird. Sobald sich das Signal S 1 nicht mehr verändert bzw. konstant bleibt, erzeugt die Geschwindigkeitsvorgabevorrichtung 4 eine Sollgeschwindigkeit Vsoll, welche vorzugsweise dem Wert der Istgeschwindigkeit Vist entspricht, mit welcher sich das Kraftfahrzeug zu diesem Zeitpunkt bewegt. Diese Sollgeschwindigkeit Vsoll wird einem nachgeordneten Regelkreis vorgegeben, welcher eine Regelvorrichtung 5 und das Kraftfahrzeug 6 umfasst. Das Kraftfahrzeug 6 umfasst einen nicht dargestellten Sensor zum Messen der Istgeschwindigkeit Vist. Diese Istgeschwindigkeit Vist wird der Regelvorrichtung 5 zugeleitet. Die Regelvorrichtung 5 umfasst vorzugsweise einen P-, PI- oder PID-Regler, um die Abweichung zwischen der Istgeschwindigkeit Vist und der Sollgeschwindigkeit Vsoll möglichst gering zu halten. Die Sollgeschwindigkeit Vsoll könnte jedoch auch proportional zum Wert des Signals S 1 gewählt sein.

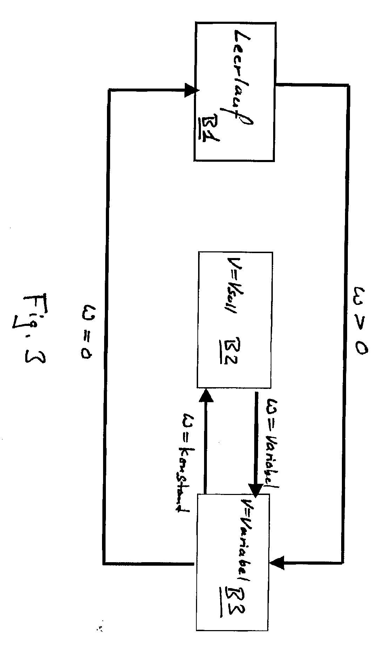

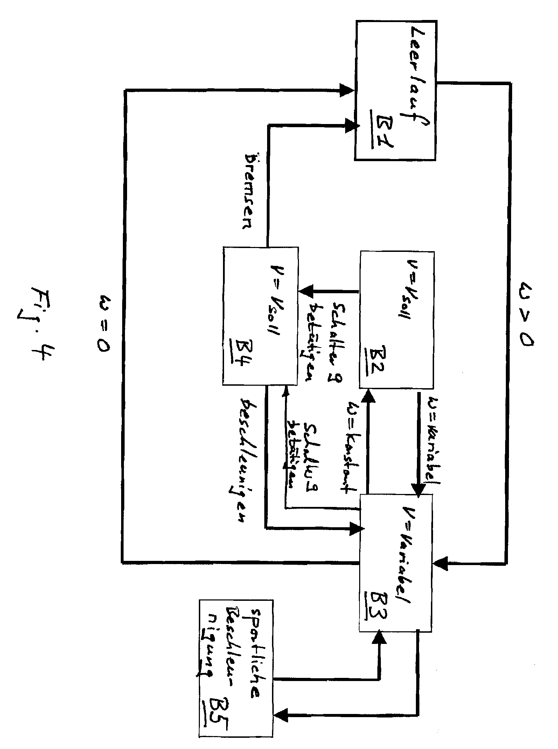

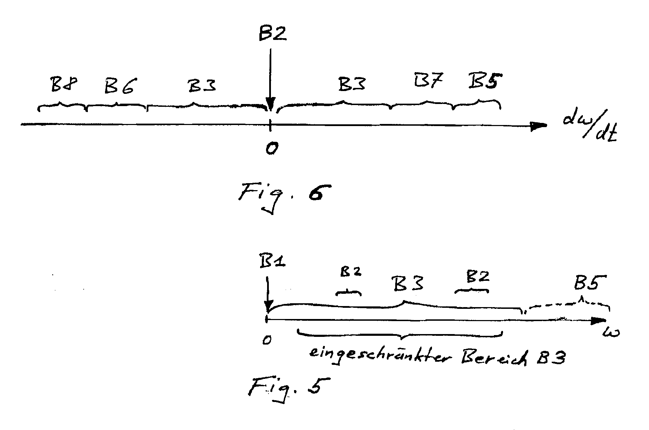

Die Geschwindigkeitsvorgabevorrichtung 4, welche vorzugsweise einen Mikroprozessor umfasst, kann aus dem digitalen Signal S 1 unterschiedliche Betriebszustände B ableiten. Figur 3 zeigt schematisch ein Zustandsdiagramm der drei Betriebszustände Leerlaufbetriebszustand B1, zweiter Betriebszustand B2 zum Halten der Geschwindigkeit und dritter Betriebszustand B3 zum Verändern der aktuellen Istgeschwindigkeit Vist in Abhängigkeit des Winkels ω des Gaspedals 2. Figur 5 zeigt die drei Betriebszustände in Funktion des Winkels ω. Im Leerlaufbetriebszustand B1 ist der Gaspedal 2 losgelassen oder nicht gedrückt, sodass dessen Winkel ω beziehungsweise das digitale Signal S 1 den Wert 0 aufweist. Sobald das Gaspedal 2 betätigt wird weist der Winkel o einen Wert > 0 auf, und die Geschwindigkeitsvorgabevorrichtung 4 wechselt in den dritten Betriebszustand B3. Die Geschwindigkeitsvorgabevorrichtung 4 verbleibt im dritten Betriebszustand B3, solange sich der Winkel ω verändert, beziehungsweise solang die Veränderungen grösser als ein definierter Winkelbereich sind, zum Beispiel mehr als +/- 2° oder +/-1°. Im dritten Betriebszustand B3 weist das Kraftfahrzeug das übliche, bekannte Fahrverhalten auf, indem die Stellung des Gaspedals 2 die Motorenleistung und damit die Geschwindigkeit bestimmt. Wird die Stellung des Gaspedals 2 nicht verändert, oder bleibt die Änderung, wie in Figur 5 dargestellt, innerhalb des definierten Winkelbereiches, so geht die Geschwindigkeitsvorgabevorrichtung 4 in den zweiten Betriebszustand B2 über. In diesem zweiten Betriebszustand B2 wird die aktuelle Fahrgeschwindigkeit Vist als Sollgeschwindigkeit Vsoll gespeichert, und diese der Regelungsvorrichtung 5 vorgegeben, sodass sich das Kraftfahrzeug konstant mit der Sollgeschwindigkeit Vsoll bewegt. Im Beispiel gemäss Figur 5 kann innerhalb des ganzen dritten Betriebszustandes B3 in den zweiten Betriebszustand B2 gewechselt werden. Der Bereich, innerhalb welchem gewechselt werden kann, könnte, wie in Figur 5 dargestellt, auch eingeschränkt sein, beispielsweise derart, dass nur innerhalb eines Winkelbereichs ω von beispielsweise 5° bis 25°, oder nur innerhalb eines Geschwindigkeitsbereichs von beispielsweise 10 km/h bis 160 km/h, vom dritten Betriebszustand B3 in den zweiten Betriebszustnad B2 gewechselt werde kann. Sobald der Winkel ω wieder um mehr als den definierten Winkelbereich variiert wird, geht die Geschwindigkeitsvorgabevorrichtung 4 wieder in den dritten Betriebszustand B3 über, und die Geschwindigkeit wird über die Stellung des Gaspedals 2 bestimmt. Wird das Gaspedal 2 losgelassen oder in Stellung mit Winkel ω = 0 gebracht, so geht die Geschwindigkeitsvorgabevorrichtung 4 in den Leerlaufbetriebszustand B1 über. Aus den Diagrammen gemäss der Figuren 3 und 5 wird ersichtlich, dass die unterschiedlichen Betriebszustände B1, B2 und B3 einzig auf Grund der Stellung des Gaspedals 2 bzw. des Winkels ω erkannt werden.

Beim Wechsel von Betriebszustand B3 zu Betriebszustand B2 kann es sich als vorteilhaft erweisen zusätzliche Kriterien zu berücksichtigen, insbesondere ein Zeitfenster bzw. eine Zeitdauer, während welcher die Bedingung des konstanten oder beinahe konstanten Winkels ω erfüllt sein muss, zum Beispiel eine Zeitdauer von mindestens 3 Sekunden, bevor vom Betriebszustand B3 zum Betriebszustand B2 gewechselt wird.

Die Geschwindigkeitsvorgabevorrichtung 4 umfasst vorteilhafterweise optische oder akustische Anzeigemittel 4a, 4b, um den aktuellen Betriebszustand, in welchem sich die Geschwindigkeitsvorgabevorrichtung 4 befindet, dem Fahrer auch anzuzeigen. Zudem könnte das Pedal 2 beim Übergang vom einen Betriebszustand zum andere einen taktilen Feedback geben, zum Beispiel durch einen kurzen, spürbaren, mechanischen Impuls, welcher vom Fahrer über den Fuss, welcher sich auf dem Pedal 2 befindet, registriert wird.

Die Regelvorrichtung 5 kann in einer ersten Ausgestaltung derart ausgebildet sein, dass nur das Gas beziehungsweise das Beschleunigen beeinflusst wird. Die Regelvorrichtung 5 kann in einer zweiten Ausgestaltung auch derart ausgebildet sein, dass sowohl das Beschleunigen als auch das Automatikgetriebe und die Bremsen beeinflusst werden. Bei der ersten Ausgestaltung könnte sich das Fahrzeug somit beispielsweise bei abfallender Strasse trotz vorgegebener Sollgeschwindigkeit Vsoll auf eine diese übersteigende Geschwindigkeit beschleunigen. Bei der zweiten Ausgestaltung, welche eine Bremswirkung aufweist, behält das Fahrzeug unabhängig von Steigung oder Gefälle die vorgegebene Sollgeschwindigkeit Vsoll bei.

Figur 2 zeigt mit Hilfe eines Blockdiagramms eine zweite Ausführungsform einer Geschwindigkeitsregelungsvorrichtung 1. Die Geschwindigkeitsvorgabevorrichtung 4 umfasst bei dieser Ausgestaltung zudem die Regelungsvorrichtung 5, welche die den Fahrzustand des Kraftfahrzeuges 6 bestimmende Stellglieder derart ansteuert, dass sich das Fahrzeug mit der Sollgeschwindigkeit Vsoll bewegt. Dabei können auch mehrere Stellglieder beeinflusst werden, bei einem Fahrzeug mit Automatikgetriebe beispielsweise sowohl das Gas als auch der Gang, um durch dieses Zusammenspiel eine vorgegebene Sollgeschwindigkeit Vsoll zu erreichen. Im Ausführungsbeispiel gemäss Figur 2 ist die Signalleitung S 1 als bidirektionale Datenleitung ausgestaltet, und der Sensor 3 weist zudem ein Antriebselement auf, um den bereits erwähnten taktilen Feedback zu erzeugen. Das Ausführungsbeispiel gemäss Figur 2 ist sowohl für ein Kraftfahrzeug mit handgeschaltetem Getriebe, als auch für ein Automatikgetriebe geeignet.

Die Geschwindigkeitsvorgabevorrichtung 4 ist zudem mit einem Sensor 8 zum Erfassen der Stellung eines Bremspedals, sowie mit einem Geschwindigkeitshalteschalter 9 verbunden. Zudem ist die Geschwindigkeitsvorgabevorrichtung 4 mit einer Anzeigevorrichtung 10, zum Beispiel einer leuchtenden Anzeige verbunden. Die Geschwindigkeitsvorgabevorrichtung 4 könnte zudem einen Sensor zum Erfassen der Kupplungsstellung oder der Gangstellung umfassen.

Figur 4 zeigt schematisch ein Ausführungsbeispiel möglicher Betriebszustände der in Figur 2 dargestellten Geschwindigkeitsregelungsvorrichtung 1. Diese umfasst eine Geschwindigkeitshaltefunktion, bei welcher das Pedal 2 losgelassen werden kann, und das Kraftfahrzeug trotzdem mit einer vorgegebenen Geschwindigkeit Vsoll fährt. Gegenüber der in Figur 3 dargestellten Ausführungsform weist die in Figur 4 dargestellte Geschwindigkeitsvorgabevorrichtung 4 zusätzlich einen vierten Betriebszustand B4 auf. Ausgehend vom Betriebszustand B2 oder B3 wird der Geschwindigkeitshalteschalter 9 gedrückt, und die dabei vorhandene Geschwindigkeit als Sollgeschwindigkeit Vsoll übernommen, welche unabhängig von der Stellung des Gaspedals 2 beibehalten wird. Das Gaspedal 2 kann nach dem Drücken des Geschwindigkeitshalteschalters 9, ähnlich wie bei einem Tempomaten, losgelassen werden, wobei das Kraftfahrzeug mit der vorgegebenen Sollgeschwindigkeit Vsoll fährt. Beim Betätigen des Gaspedals oder der Bremse geht die Geschwindigkeitsvorgabevorrichtung 4 in den Leerlaufbetriebszustand B1, und beim Betätigen der Gaspedals 2 in den dritten Betriebszustand B3 über.

Die Geschwindigkeitsvorgabevorrichtung 4 kann zudem weitere Betriebszustände umfassen. Beispielsweise einen Betriebszustand B5 zum "sportlichen Beschleunigen", in welchen beispielsweise, wie in Figur 5 strichliert angedeutet, bei tief nach unten getretenem Gaspedal 2, beziehungsweise bei grossem Winkel o, gewechselt wird. In diesem Betriebszustand B5 kann beispielsweise das Schalten des Automatikgetriebes derart festgelegt sein, dass beispielsweise erst bei hoher Motorumdrehungszahl in den nächsten Gang geschaltet wird, um ein leistungsstarkes Beschleunigen zu ermöglichen, oder dass so bald als möglich in den nächsten Gang geschaltet wird, um beim Beschleunigen den Benzinverbrauch zu beschränken.

In einem weiteren Ausführungsbeispiel kann die Dynamik der Betätigung des Gaspedals 2 zum Übergang in die unterschiedlichen Betriebszustände verwendet werden, wie dies in Figur 6 dargestellt ist, in welcher entlang der Achse die Winkelveränderung des Gaspedals, das heisst die Funktion dω/dt dargestellt ist, wobei positive Werte einem Hinunterdrücken des Gaspedals und negative Werte einem Zurücknehmen des Gaspedals entsprechen. Solange das Gaspedal nicht bewegt wird, wird der Betriebszustand B2 beibehalten. Wird das Gaspedal nur langsam nach Unten oder Oben bewegt, so wird der Betriebszustand B3 eingenommen. Ebenso kann beispielsweise ein Betriebszustand B6 vorgesehen sein, in welchem bei schnellem Zurücknehmen des Gaspedals 2 (schnelles Verkleinern des Winkels ω) der Gang gewechselt wird, wobei jedes schnelle Zurücknehmen des Gaspedals 2 beispielsweise ein Schalten in den nächst tieferen Gang bewirken kann. Nach dem Schalten wird wiederum der Betriebszustand B3 oder B2 eingenommen. Ebenso kann beispielsweise ein Betriebszustand B7 vorgesehen sein, in welchem bei schnellem Hinunterdrücken des Gaspedals 2 (schnelles Vergrössern des Winkels ω) der Gang gewechselt wird, wobei jedes schnelle Hinunterdrücken des Gaspedals 2 beispielsweise ein Schalten in den nächst höheren Gang bewirken kann. Nach dem Schalten wird wiederum der Betriebszustand B3 oder B2 eingenommen. Bei einem schnellen Durchtreten des Gaspedals 2 könnte beispielsweise auch in den in Figur 4 beschriebenen Betriebszustand B5 gewechselt werden, oder bei einem schnellen Loslassen des Gaspedals 2 in einen Betriebszustand B8, wobei im Betriebszustand B8 beispielsweise eine Vollbremsung ausgelöst wird. Eine derartige, mit Hilfe von Figur 6 beschriebene Regelung verwendet beispielsweise ein sogenanntes Kennfeld mit Kennfeldvorgaben. Wobei die Kennfeldvorgaben durch die Betriebszuständen B2,B3,B5,B6,B7,B8 in Funktion der zeitlichen Winkeländerung dω/dt festgelegt sind.

Die erfindungsgemässe Geschwindigkeitsregelungsvorrichtung 1 kann in neue Kraftfahrzeuge, insbesondere Automobile, eingebaut werden. Es ist jedoch auch auf einfache Weise möglich bestehende Automobile nachzurüsten, weil als Eingabevorrichtung 2 das bereits vorhandene Pedal verwendet werden kann, und für das Ausführungsbeispiel gemäss Figur 1 und 3 keine zusätzlichen Eingabemittel erforderlich sind. Die Geschwindigkeitsvorgabevorrichtung 4 sowie die Regelungsvorrichtung 5 sind vorzugsweise als elektronische Komponenten ausgestaltet, welche irgendwo im Automobil zu montieren und mit den entsprechenden Stellgliedern des Motors zu verbinden sind. Daher ist der Umrüstungsaufwand bestehender Automobile sehr gering. Die erfindungsgemässe Geschwindigkeitsregelungsvorrichtung 1 ist sowohl für Fahrzeuge mit handgeschaltetem Getriebe als auch für Automatikgetriebe geeignet. Die Eingabevorrichtung 2 kann in unterschiedlicher Weise als bewegliches Eingabemittel ausgestaltet sein, nebst der Ausführungsform als Pedal zum Beispiel auch in Form eines linear verschiebbaren Eingabemittels, eines so genannten Joysticks, oder andere Eingabemittel zum Gasgeben, wie diese beispielsweise bei Motorrädern verwendet werden.

## Patentansprüche

1. Geschwindigkeitsregelungsvorrichtung (1) für Kraftfahrzeuge (6), umfassend ein bewegliches Betätigungselement (2) zum Beschleunigen des Kraftfahrzeuges (6), einen Sensor (3) zum Erfassen der Stellung des Betätigungselementes (2), sowie eine Geschwindigkeitsvorgabevorrichtung (4), welche abhängig vom Wert des Sensors (3) zumindest zwei unterschiedliche Betriebszustände (B) erkennt, einen zweiten Betriebszustand (B2) zum Halten der Geschwindigkeit V auf einer konstanten Sollgeschwindigkeit Vsoll, und einen dritten Betriebszustand (B3) zum Verändern der aktuellen Istgeschwindigkeit Vist, sowie umfassend eine Regelungsvorrichtung (5), welche im zweiten Betriebszustand (B2) die Istgeschwindigkeit Vist des Kraftfahrzeuges mit der Sollgeschwindigkeit Vsoll vergleicht, und den Motor und/oder die Bremse des Kraftfahrzeuges (6) derart ansteuert, dass sich das Kraftfahrzeug (6) mit der Sollgeschwindigkeit Vsoll bewegt.

2. Geschwindigkeitsregelungsvorrichtung (1) nach Anspruch 1, **dadurch gekennzeichnet, dass** die Geschwindigkeitsvorgabevorrichtung (4) in den zweiten Betriebszustand (B2) übergeht oder diesen zweiten Betriebszustand (B2) beibehält, solange der Sensors (3) einen vorgegebenen Wert oder Wertebereich aufweist.

3. Geschwindigkeitsregelungsvorrichtung (1) nach Anspruch 2, **dadurch gekennzeichnet, dass** der vorgegebene Wertebereich in einem Winkelbereich von +/- 2° liegt, und vorzugsweise in einem Winkelbereich von +/- 1° liegt.

4. Geschwindigkeitsregelungsvorrichtung (1) nach Anspruch 1, **dadurch gekennzeichnet, dass** die Geschwindigkeitsvorgabevorrichtung (4) in den zweiten Betriebszustand (B2) übergeht oder diesen beibehält, solange die Veränderung dω/dt des Sensorwertes in Funktion der Zeit t Null ist oder innerhalb eines vorgegebenen Wertebereichs liegt.

5. Geschwindigkeitsregelungsvorrichtung (1) nach einem der Ansprüche 2 bis 4, **dadurch gekennzeichnet, dass** diese eine Zeitüberwachungsvorrichtung umfasst, welche den Übergang in den zweiten Betriebszustand (B2) erst dann erlaubt, wenn der vorgegebene Wertebereich während einer bestimmten Zeitdauer anliegt, insbesondere während zumindest 3 Sekunden.

6. Geschwindigkeitsregelungsvorrichtung (1) nach einem der vorhergehenden Ansprüche, **dadurch gekennzeichnet, dass** die Geschwindigkeitsvorgabevorrichtung (4) in den dritten Betriebszustand (B3) übergeht oder diesen dritten Betriebszustand (B3) beibehält, sobald der Sensor (3) sich ausserhalb des vorgegebenen Wertebereichs befindet.

7. Geschwindigkeitsregelungsvorrichtung (1) nach einem der Ansprüche 1 bis 5, **dadurch gekennzeichnet, dass** die Geschwindigkeitsvorgabevorrichtung (4) einen Geschwindigkeitshalteschalter (9) umfasst, nach dessen Betätigung der zweite Betriebszustand (B2) eingenommen und unabhängig vom Wert des Sensors (3) gehalten wird.

8. Geschwindigkeitsregelungsvorrichtung (1) nach einem der vorhergehenden Ansprüche, **dadurch gekennzeichnet, dass** die Geschwindigkeitsvorgabevorrichtung (4) einen Leerlaufbetriebszustand (B1) umfasst, welcher beim Betätigen der Bremse, oder beim Betätigen der Kupplung, oder beim Loslassen des Betätigungselementes (2) eingenommen wird.

9. Geschwindigkeitsregelungsvorrichtung (1) nach einem der vorhergehenden Ansprüche, **dadurch gekennzeichnet, dass** eine Anzeigeeinrichtung den Betriebszustand (B) anzeigt, und/oder dass eine Anzeige- oder Signaleinrichtung eine Änderung des Betriebszustandes (B) signalisiert.

10. Geschwindigkeitsregelungsvorrichtung (1) nach einem der vorhergehenden Ansprüche, **dadurch gekennzeichnet, dass** die Geschwindigkeitsvorgabevorrichtung (4) einzig auf Grund des Wertes des Sensors (3) zumindest zwei unterschiedliche Betriebszustände (B) aus der Gruppe folgender Betriebszustände (B) erkennt: den Leerlaufbetriebszustand (B1), den zweiten Betriebszustand (B2) und den dritten Betriebszustand (B3).

11. Geschwindigkeitsregelungsvorrichtung (1) nach einem der vorhergehenden Ansprüche, **dadurch gekennzeichnet, dass** die Geschwindigkeitsvorgabevorrichtung (4) in Abhängigkeit des Wertes des Sensors (3) zusätzliche Betriebszustände (B) erkennt, welche ein Schalten des Motorgetriebes auslösen.

12. Verfahren zur Regelung der Geschwindigkeit V eines Kraftfahrzeuges, indem aus der Stellung eines beweglichen Betätigungselementes (2) zum Beschleunigen des Kraftfahrzeuges (6) zumindest zwei unterschiedliche Betriebszustände (B) abgeleitet werden, einen zweiten Betriebszustand (B2) zum Halten der Geschwindigkeit V auf einer Sollgeschwindigkeit Vsoll sowie einen dritten Betriebszustand (B3) zum Verändern der aktuellen Istgeschwindigkeit Vist, wobei im zweiten Betriebszustand (B2) eine Istgeschwindigkeit Vist gemessen wird, diese mit der Sollgeschwindigkeit Vsoll verglichen wird, und der Motor und/oder die Bremse des Kraftfahrzeuges derart angesteuert wird, dass die Fahrgeschwindigkeit V der Sollfahrgeschwindigkeit Vsoll entspricht.

13. Verfahren nach Anspruch 12, **dadurch gekennzeichnet, dass** der zweite Betriebszustand (B2) eingenommen oder beibehalten wird, solange die Stellung des beweglichen Betätigungselementes (2) konstant ist oder sich um einen vorgegebenen Wertebereich ändert, insbesondere um einen Wertebereich von weniger als +/- 2°.
